# EUROPEAN PATENT APPLICATION

(11) **EP 4 819 462 A1**
(43) Date of publication of application: **07.10.2026**
(21) Application number: 24902406.8
(22) Date of filing: 30.10.2024
(51) Int. Cl.: H02M 1/00, H02M 7/537, H02J 7/00, H02P 27/06

(54) **APPARATUS FOR VEHICLE EXTERNAL DISCHARGE, AND VEHICLE**

(30) Priority: 12.12.2023 CN 202311704716
(71) Applicant: Yutong Bus Co., Ltd., Zhengzhou, Henan 450061 (CN)
(72) Inventor: LI, Chunqing, Zhengzhou, Henan 450061 (CN); SHEN, Zhanchu, Zhengzhou, Henan 450061 (CN); HAN, Guanghui, Zhengzhou, Henan 450061 (CN); HOU, Haofeng, Zhengzhou, Henan 450061 (CN); LI, Jing, Zhengzhou, Henan 450061 (CN); MA, Shuwei, Zhengzhou, Henan 450061 (CN)
(74) Representative: Gulde & Partner
(86) International application number: PCT/CN2024/128539
(87) International publication number: WO 2025/123982

(57) **Abstract**

The present invention relates to a vehicle external discharge device and a vehicle, and belongs to the technical field of electric vehicles. In the present invention, by reusing an inversion module in a motor control unit, switching of connection between the motor control unit and a discharge interface and connection between the motor control unit and a driving motor is implemented through a switching unit, so that in a scenario in which a vehicle external discharge condition is required, the inversion module is electrically connected to the discharge interface, and when the vehicle is in a driving state, the inversion module is electrically connected to the driving motor. According to the present invention, the existing motor control unit of the vehicle is reused to implement the vehicle external discharge, so that the vehicle is changed to a lesser extent, and no direct-current alternating-current (DCAC) bidirectional on-board charger needs to be added, thereby reducing the weight and cost of the vehicle. In addition, the switching of the connection between the motor control unit and the driving motor and the connection between the motor control unit and the discharge interface can be implemented, so that the vehicle can select between the driving state and an external discharge state.

## Description

### TECHNICAL FIELD

The present invention relates to the technical field of electric vehicles, and specifically, to a vehicle external discharge device and a vehicle.

### BACKGROUND

With the development of electric vehicles, the electric vehicles are not limited to being merely passenger-carrying tools. The market requires the electric vehicles to provide more additional functions, which gives rise to more related concepts, for example, vehicle to grid (V2G), vehicle to vehicle (V2V), vehicle to home (V2H), and vehicle to load (V2L). Many countries and regions plan standards for vehicle external discharge functions. These standards endow the electric vehicles with more value-added services. For this purpose, developing a vehicle external discharge function will greatly expand additional functions of the electric vehicles, so that the electric vehicles can provide value-added services in various special scenarios, such as natural disaster, road rescue, and outdoor camping.

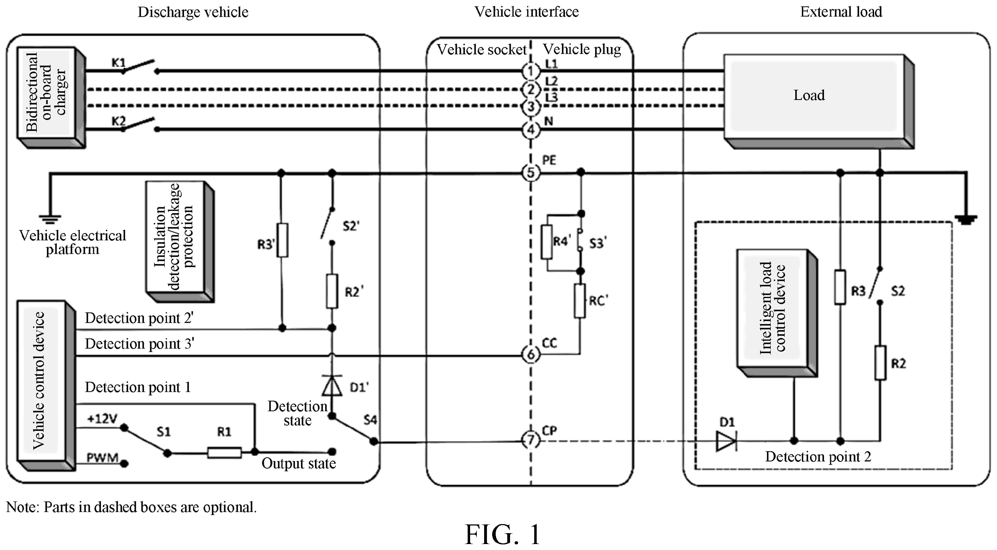

At present, a common practice in the industry is to add a direct-current alternating-current (DCAC) bidirectional on-board charger (a power supply module) into a vehicle. As shown in FIG. 1, when vehicle external discharge is selected, the power supply module can operate in a DC2AC mode, and can provide a vehicle to load (V2L) alternating-current discharging function and a vehicle to vehicle (V2V) alternating-current charging function. However, adding the DCAC bidirectional on-board charger increases the cost and weight of the vehicle.

### SUMMARY

The present invention aims to provide a vehicle external discharge device and a vehicle, so as to solve a problem in the prior art that the cost and weight of a vehicle are increased because a DCAC bidirectional on-board charger is added to implement vehicle external discharge.

To solve the foregoing technical problem, the present invention provides a vehicle external discharge device, including a battery, an inversion module in a motor control unit, a switching unit, and a discharge interface. A direct-current end of the inversion module is connected to the battery. An alternating-current end of the inversion module is connected to a first end of the switching unit. A second end of the switching unit is connected to the discharge interface. A third end of the switching unit is configured to be connected to a driving motor on a vehicle. The switching unit is configured to electrically connect the inversion module to the discharge interface in a case where the vehicle satisfies an external discharge condition, and is further configured to electrically connect the inversion module to the driving motor when the vehicle is in a driving state.

Further, a switching unit includes a motor switch and a discharge interface switch. One end of the motor switch and one end of the discharge interface switch are connected together and serves as the first end of the switching unit. The other end of the motor switch is used as the third end of the switching unit. The other end of the discharge interface switch is used as the second end of the switching unit. When the inversion module is electrically connected to the discharge interface, the motor switch is open, and the discharge interface switch is closed, the inversion module is electrically connected to the discharge interface. When the discharge interface switch is open and the motor switch is closed, the inversion module is electrically connected to the driving motor.

Further, the discharge interface is reused with a charge interface on the vehicle.

Further, the vehicle external discharge device includes a dashboard. The dashboard is configured to change a working state of the switching unit through a switch driving control unit of the switching unit based on a mode selection instruction from a user. The mode includes an external discharge mode.

Further, the external discharge condition includes: connector insertion is detected, a user selects an external discharge mode, and the battery satisfies an external discharge boundary condition.

Further, the external discharge boundary condition includes: a connector presence signal is detected; a capacity of the battery is greater than a set capacity value; a lowest voltage of a cell of the battery is greater than or equal to a set voltage value of the battery; the battery has no fault, and a battery management system continuously receives a vehicle to everything (V2X) command message.

Further, when the switching unit is in a state in which the inversion module is electrically connected to the discharge interface, if any external discharge boundary condition is not satisfied, the switching unit will disconnect the electrical connection between the inversion module and the discharge interface.

To solve the foregoing technical problem, the present invention further provides a vehicle, including a vehicle external discharge device. The vehicle external discharge device includes a battery and a discharge interface, and further includes a switching unit and an inversion module in a motor control unit. A direct-current end of the inversion module is connected to the battery. An alternating-current end of the inversion module is connected to a first end of the switching unit. A second end of the switching unit is connected to the discharge interface. A third end of the switching unit is connected to a driving motor on a vehicle. The switching unit is configured to electrically connect the inversion module to the discharge interface in a case where the vehicle satisfies an external discharge condition, and is further configured to electrically connect the inversion module to the driving motor when the vehicle is in a driving state.

Further, a switching unit includes a motor switch and a discharge interface switch. After being connected, one end of the motor switch and one end of the discharge interface switch are connected together and serves as the first end of the switching unit. The other end of the motor switch is used as the third end of the switching unit. The other end of the discharge interface switch is used as the second end of the switching unit. When the motor switch is open, and the discharge interface switch is closed, the inversion module is electrically connected to the discharge interface. When the discharge interface switch is open and the motor switch is closed, the inversion module is electrically connected to the driving motor.

Further, the discharge interface is reused with a charge interface on the vehicle.

Beneficial effects of the foregoing technical solution are as follows: The overall concept of the present invention is to reuse the inversion module in the motor control unit to implement vehicle external discharge. Specifically, the switching unit is disposed among the inversion module, the driving motor, and the discharge interface. The switching unit can electrically connect the inversion module to the driving motor when the vehicle is in a normal driving state, so that the vehicle can still provide power for the driving motor to cause the driving motor to work normally in a case where external charging is not required. The switching unit can further electrically connect the inversion module to the discharge interface in a case where the vehicle external discharge is required, so as to perform external discharge through the battery in the vehicle and the inversion module in the motor control unit. This external discharge manner requires fewer changes to the vehicle, and does not need to add a DCAC bidirectional on-board charger, thereby reducing the weight and cost of the vehicle.

### BRIEF DESCRIPTION OF THE DRAWINGS

FIG. 1 is a schematic diagram of a common industrial solution for vehicle external discharge in the prior art;
FIG. 2(a), FIG. 2(b), and FIG. 2(c) are three different schematic diagrams of vehicle external discharge according to an embodiment of a vehicle external discharge device of the present invention;
FIG. 3 is a schematic diagram of a vehicle external discharge solution according to an embodiment of a vehicle external discharge device of the present invention; and
FIG. 4 is a flowchart of control of vehicle external discharge according to an embodiment of a vehicle external discharge method of the present invention.

### DETAILED DESCRIPTION

The present invention provides a vehicle external discharge device, specifically including a battery, an inversion module in a motor control unit, a switching unit, and a discharge interface. A direct-current end of the inversion module is connected to the battery, and an alternating-current end is connected to a first end of the switching unit. A second end of the switching unit is connected to the discharge interface. A third end of the switching unit is configured to be connected to a driving motor on a vehicle. The switching unit is configured to electrically connect the inversion module to the discharge interface in a case where the vehicle satisfies an external discharge condition, and is further configured to electrically connect the inversion module to the driving motor when the vehicle is in a driving state. In the present invention, the inversion module in the motor control unit is reused, so that the vehicle itself is changed to a lesser extent, and a DCAC bidirectional on-board charger does not need to be added. Thus, a discharge function is implemented with relatively low modification cost. Compared with prior art approach of adding the DCAC bidirectional on-board charger, the weight and cost of the vehicle are reduced. Moreover, the present invention further provides a vehicle including the foregoing vehicle external discharge device.

To make the objectives, technical solutions, and advantages of the present invention clearer, the present invention will be further described in detail below with reference to the accompanying drawings and the embodiments.

### Vehicle external discharge device embodiment:

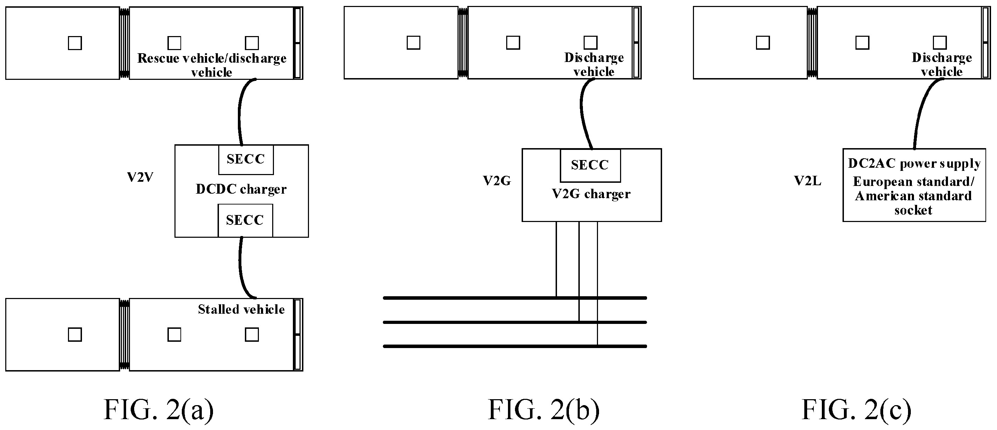

Refer to FIG. 2(a), FIG. 2(b), and FIG. 2(c) for three usage scenario modes of vehicle external discharge. The present invention includes three usage modes: vehicle to grid (V2G), vehicle to vehicle (V2V), and vehicle to load (V2L).

A motor control unit itself has an alternating-current to direct-current conversion function and direct-current to alternating-current conversion function, and motor driving is mutually exclusive with both alternating-current charging (the alternating-current charging is to charge a battery on a vehicle) and alternating-current discharging (the alternating-current discharging is to discharge the battery of the vehicle to the outside). For example, during driving of the vehicle, the vehicle is not allowed to perform external discharge or be charged. During charging or external discharging, the vehicle is not allowed to drive. Thus, a switch control box (i.e. the switching unit) is added between a driving motor and the motor control unit. During parking of the vehicle, an alternating-current output of the motor control unit is switched to a charging port by using the switch control box, so that a user obtains alternating-current power from the charging port, to realize an external discharge function.

In addition, for the implementation of the external discharge function, a vehicle control unit (VCU), the motor control unit (MCU), a battery management system (BMS), a V2G switch driving control unit, and a dashboard need to cooperate according to a set logic.

An alternating-current discharge interface is configured to provide V2L discharging function or V2V charging function.

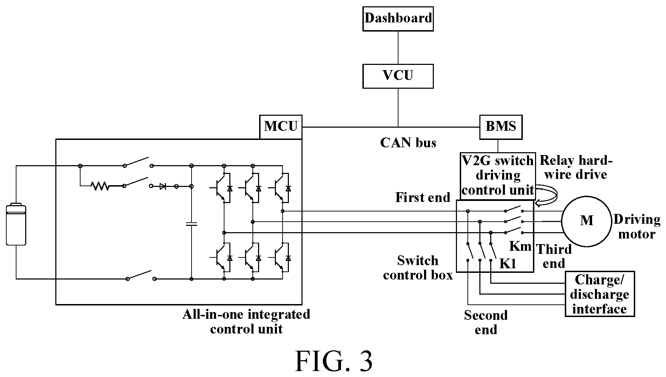

A vehicle external discharge device provided in this embodiment includes a battery, a BMS, an MCU, a switch control box, a V2G switch control driver, a charge/discharge interface (i.e. a charge/discharge interface in FIG. 3), a VCU, and a dashboard. The MCU includes an inversion module. A direct-current end of the inversion module is connected to the battery. The MCU is configured to be connected to the battery, the switch control box, and the BMS. The BMS is connected to the V2G switch control driver mounted on the switch control box, and controls turning on and off of a switch in the switch control box by controlling the V2G switch control driver. The switch control box is connected to the driving motor and the charge/discharge interface. The switch control box includes a motor switch and a charge/discharge interface switch. The motor switch Km is connected to the driving motor and is configured to control whether an inverter is electrically connected to the driving motor. The charge/discharge interface switch K1 is connected to the charge/discharge interface and is configured to control whether the inverter is electrically connected to the charge/discharge interface. When the vehicle is driving, a logic corresponding to the switch control box is that the charge/discharge interface switch Kl is open, and the motor switch Km is closed. During vehicle external discharging or alternating-current charging, the driving motor does not work, and the vehicle cannot drive. A logic corresponding to the switch control box is that the motor switch Km is open, and the charge/discharge interface switch Kl is closed. The charge/discharge interface is obtained by modifying a charge interface of the vehicle (the modification is known in the prior art), so that the charge interface of the vehicle is a discharge interface at the same time. That is, the discharge interface and the charge interface are integrated and configured as one interface.

It should be noted that the "charge/discharge interface" in this embodiment can implement two functions: discharging and charging. It is the discharge interface in a case where the battery is required to perform external discharging. It is the charge interface in a case where the battery on the vehicle needs to be charged. Correspondingly, the inverter in the motor control unit no longer has only an inversion function, but also has a rectification function. It can also be seen from FIG. 3 that two parallel branches are disposed between the battery and the inverter. Only a switch is connected in series in a first branch, and a switch and an anti-reverse diode are connected in series in a second branch. The battery can be in a charging state when the switch in the first branch is in a closed state and the switch in the second branch is in an open state. The battery can only be in a discharging state when the switch in the second branch is in a closed state and the switch in the first branch is in an open state. Certainly, the vehicle external discharge device provided in this embodiment focuses on implementing the vehicle external discharge function. The discharge interface may not be integrated with the charge interface on the vehicle. In this case, the vehicle has two interfaces with independent functions, which are respectively a charge interface and a discharge interface. Correspondingly, a "charge/discharge interface switch" connected to the discharge interface is a "discharge interface switch".

The VCU is connected to the dashboard, the MCU, and the BMS. The dashboard sets a current operating mode through the VCU, and these operating modes can be started or stopped through the dashboard. The dashboard has external discharge mode options including: V2V, V2G, and V2L, where V2G has two sub-menu options: AC220V and AC380V. Content displayed in the dashboard further includes: "external discharge start" and "external discharge stop". In addition, a V2X discharge target state of charge (SOC) value can be set in the dashboard. The external discharge can be automatically stopped at the SOC value. In addition, a BMS power battery external discharge boundary condition can also be set, to protect the battery. This is specifically shown in FIG. 3.

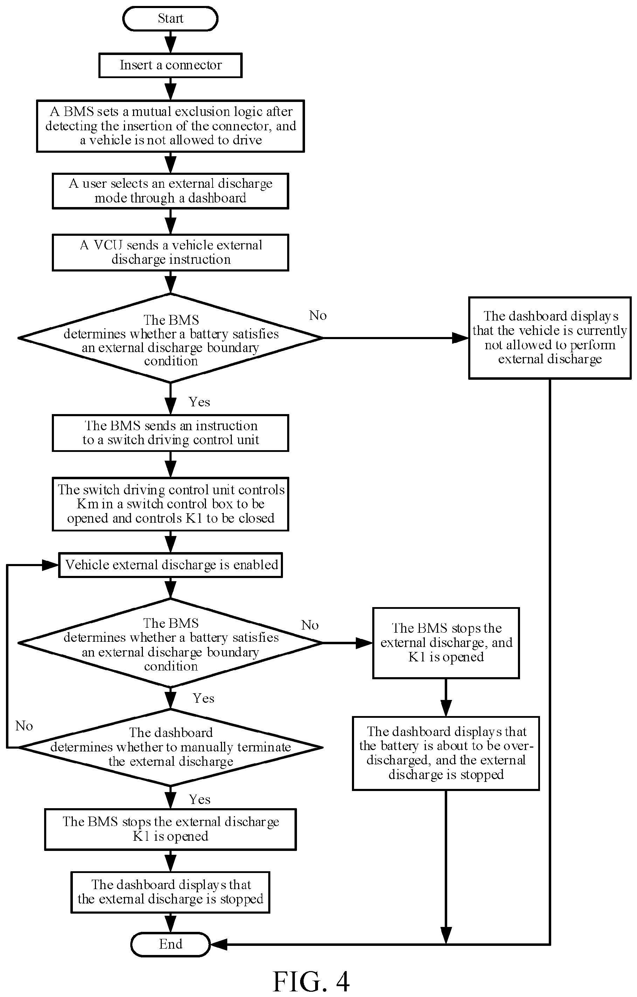

A specific flow of vehicle external discharge is as follows:
1) After a connector is inserted into the charge/discharge interface, the battery management system sets a mutual exclusion logic after detecting the insertion of the connector, and the vehicle is not allowed to drive. A user selects an external discharge mode through the dashboard. After receiving dashboard information, the vehicle control unit sends a vehicle external discharge command. If the battery management system determines that the battery does not satisfy an external discharge boundary condition, the dashboard displays that the vehicle is currently not allowed to perform external discharge. If the battery management system determines that the battery satisfies an external discharge boundary condition, the battery management system sends a command to the switch control driver to control the motor switch Km in the switch control box to be opened and the charge/discharge interface switch K1 to be closed. The vehicle external discharge is enabled.
2) In the process of performing the external discharge of the battery, the battery management system continues to constantly determine whether the battery satisfies an external discharge boundary condition. If the battery does not satisfy an external discharge boundary condition, the battery management system stops external discharge, the charge/discharge interface switch K1 is opened, and the dashboard displays that the battery is about to be over-discharged, and the external discharge is stopped. If the battery satisfies an external discharge boundary condition, whether an instruction for manually terminating the external discharge is received is further determined. If the instruction for manually terminating the external discharge is not received, step 2) is executed again to enable the vehicle to continue the external discharge. If the instruction for manually terminating the external discharge is received, the battery management system stops the external discharge, the charge/discharge interface switch K1 is opened, and the dashboard displays that the external discharge is stopped. A specific process is shown in FIG. 4.

The external discharge boundary conditions include:
1. The battery management system detects a connector presence signal (a PP signal).
2. A capacity of the battery is greater than or equal to 30%.
3. A lowest voltage of a cell is greater than or equal to 3.2 V.
4. The battery has no fault.
5. The BMS continuously receives a V2X command message.

If any one of the foregoing conditions is not satisfied, a discharge state cannot be started or a current discharge state is stopped.

### Vehicle embodiment:

According to the vehicle embodiment of the present invention, the vehicle includes a vehicle external discharge device. The device is the same as the vehicle external discharge device introduced in the vehicle external discharge device embodiment. Vehicle external discharge is also implemented by reusing the inverter of the motor control unit. The structure, an operating principle, and corresponding effects that can be achieved by the vehicle external discharge device have been described in detail in the vehicle external discharge device embodiment, and details are not described in this embodiment again.

The above description is specific implementations of the present invention, but the present invention is not limited thereto. The basic idea of the present invention lies in the foregoing basic solutions. For those of ordinary skill in the art, based on the teaching of the present invention, designing various variant models, formulas, and parameters does not require creative work. Changes, modifications, replacements, and variations made to the embodiments without departing from the principle and spirit of the present invention still fall within the protection scope of the present invention.

## Claims

1. A vehicle external discharge device, comprising a battery and a discharge interface, and further comprising a switching unit and an inversion module in a motor control unit, wherein a direct-current end of the inversion module is connected to the battery; an alternating-current end of the inversion module is connected to a first end of the switching unit; a second end of the switching unit is connected to the discharge interface; a third end of the switching unit is configured to be connected to a driving motor on a vehicle; and the switching unit is configured to electrically connect the inversion module to the discharge interface in a case where the vehicle satisfies an external discharge condition, and is further configured to electrically connect the inversion module to the driving motor when the vehicle is in a driving state.

2. The vehicle external discharge device according to claim 1, wherein a switching unit comprises a motor switch and a discharge interface switch; after being connected, one end of the motor switch and one end of the discharge interface switch are connected together and serves as the first end of the switching unit; the other end of the motor switch is used as the third end of the switching unit; the other end of the discharge interface switch is used as the second end of the switching unit; and when the motor switch is open and the discharge interface switch is closed, the inversion module is electrically connected to the discharge interface; and when the discharge interface switch is open and the motor switch is closed, the inversion module is electrically connected to the driving motor.

3. The vehicle external discharge device according to claim 1, wherein the discharge interface is reused with a charge interface on the vehicle.

4. The vehicle external discharge device according to claim 1 or 2, further comprising a dashboard, wherein the dashboard is configured to change a working state of the switching unit through a switch driving control unit of the switching unit based on a mode selection instruction by a user; and the mode comprises an external discharge mode.

5. The vehicle external discharge device according to claim 1, wherein the external discharge condition comprises: connector insertion is detected, a user selects an external discharge mode, and the battery satisfies an external discharge boundary condition.

6. The vehicle external discharge device according to claim 5, wherein the external discharge boundary condition comprises: a connector presence signal is detected; a capacity of the battery is greater than a set capacity value; a lowest voltage of a cell of the battery is greater than or equal to a set voltage value of the battery; the battery has no fault; and a battery management system continuously receives a vehicle to everything (V2X) command message.

7. The vehicle external discharge device according to claim 5, wherein when the switching unit is in a state in which the inversion module is electrically connected to the discharge interface; and if any external discharge boundary condition is not satisfied, the switching unit will disconnect the electrical connection between the inversion module and the discharge interface.

8. A vehicle, comprising a vehicle external discharge device, wherein the vehicle external discharge device comprises a battery and a discharge interface, and further comprises a switching unit and an inversion module in a motor control unit; a direct-current end of the inversion module is connected to the battery; an alternating-current end of the inversion module is connected to a first end of the switching unit; a second end of the switching unit is connected to the discharge interface; a third end of the switching unit is connected to a driving motor on a vehicle; and the switching unit is configured to electrically connect the inversion module to the discharge interface in a case where the vehicle satisfies an external discharge condition, and is further configured to electrically connect the inversion module to the driving motor when the vehicle is in a driving state.

9. The vehicle according to claim 8, wherein a switching unit comprises a motor switch and a discharge interface switch; after being connected, one end of the motor switch and one end of the discharge interface switch are connected together and serves as the first end of the switching unit; the other end of the motor switch is used as the third end of the switching unit; the other end of the discharge interface switch is used as the second end of the switching unit; and when the motor switch is open and the discharge interface switch is closed, the inversion module is electrically connected to the discharge interface; and when the discharge interface switch is open and the motor switch is closed, the inversion module is electrically connected to the driving motor.

10. The vehicle according to claim 8, wherein the discharge interface is reused with a charge interface on the vehicle.
